# EUROPEAN PATENT APPLICATION

(11) **EP 4 489 522 A1**
(43) Date of publication of application: **08.01.2025**
(21) Application number: 22935847.8
(22) Date of filing: 26.04.2022
(51) Int. Cl.: H05B 6/12, H05B 6/06

(54) **INDUCTION HEATING-TYPE COOKTOP**

(30) Priority: 28.03.2022 KR 20220038184
(71) Applicant: LG Electronics Inc., Yeongdeungpo-gu Seoul 07336 (KR)
(72) Inventor: KWACK, Younghwan, Seoul 08592 (KR); SON, Seongho, Seoul 08592 (KR); JEON, Seonho, Seoul 08592 (KR); CHO, Chuhyoung, Seoul 08592 (KR); JI, Jongseong, Seoul 08592 (KR)
(74) Representative: Vossius & Partner Patentanwälte Rechtsanwälte mbB
(86) International application number: PCT/KR2022/005929
(87) International publication number: WO 2023/191172

(57) **Abstract**

An induction heating-type cooktop according to an embodiment of the present disclosure comprises: a upper plate part on which an item to be heated is placed; a working coil for generating magnetic field for heating the item to be heated or an intermediate heating body; and an inverter unit that operates so as to provide the working coil with current, wherein the inverter unit can adjust the operating frequency in accordance with the constituent material of the item to be heated.

## Description

### [Technical Field]

The present disclosure relates to an induction heating type cooktop. More specifically, the present disclosure relates to an induction heating type cooktop capable of heating both magnetic materials and non-magnetic materials.

### [Background Art]

Various types of cooking equipment are used to heat food at home or in a restaurant. Conventionally, gas stoves using gas as fuel have been widely used, but recently devices for heating an object to be heated, for example, cooking vessels such as pots, have been spread using electricity instead of gas.

A method of heating an object to be heated using electricity is largely divided into a resistance heating method and an induction heating method. The electric resistance method is a method of heating an object to be heated by transferring heat generated when an electric current flows through a metal resistance wire or a non-metallic heating element such as silicon carbide to the object to be heated (for example, a cooking vessel) through radiation or conduction. In addition, when high-frequency power of a predetermined magnitude is applied to the coil, the induction heating method generates an eddy current in the object to be heated consisting of a metal component using a magnetic field generated around the coil to heat the object to be heated itself.

Recently, most of the induction heating methods are applied to cooktops.

On the other hand, these cooktops have a limitation that the heating efficiency for non-magnetic containers is very low compared to the heating efficiency for magnetic containers. Therefore, in order to improve the problem of very low heating efficiency for non-magnetic materials (e.g., heat-resistant glass, ceramics, etc.), the cooktop includes an intermediate heating body to which eddy current is applied, and the non-magnetic material can be heated through this intermediate heating body.

However, when the intermediate heating body is provided in the cooktop in this way, there is a disadvantage that the heating efficiency is reduced because some of the magnetic fields are combined with the intermediate heating body instead of the magnetic container when heating the magnetic container.

### [Disclosure]

### [Technical Problem]

The purpose of this present disclosure is to provide an induction heating type cooktop that improves heating efficiency for both magnetic and non-magnetic materials, respectively.

The purpose of this present disclosure is to provide an induction heating type cooktop that minimizes the problem of reduced heating efficiency when heating a magnetic container by providing an intermediate heating body.

### [Technical Solution]

The present disclosure can reduce the magnetic field coupling force of the intermediate heating body when heating a magnetic container by controlling an operating frequency according to a material of the object to be heated.

The present disclosure can control the magnetic field coupling force of the intermediate heating body according to the operating frequency by forming the intermediate heating body with a non-magnetic material having a thickness thinner than a skin depth.

An induction heating type cooktop according to an embodiment of present disclosure comprises an upper plate on which an object to be heated is placed, an intermediate heating body arranged on the upper plate, a working coil configured to generate a magnetic field for heating the object to be heated or the intermediate heating body, and an inverter that is driven so that a current is supplied to the working coil, wherein the inverter is configured to adjust an operating frequency according to a material of the object to be heated.

The intermediate heating body can be formed of a non-magnetic metal.

The inverter can adjust the operating frequency when the object to be heated is a magnetic material to be lower than the operating frequency when the object to be heated is a non-magnetic material.

The first frequency band can include a frequency band of 20 kHz or more and less than 50 kHz, and the second frequency band can include a frequency band of 50 kHz or more.

The working coil can include first and second working coils, and the inverter can control the operating frequency and the current of the first and second working coils according to the material of the object to be heated.

The inverter can control the operating frequency to a first frequency band and drive the currents of the first and second working coils to flow in different directions when the object to be heated is a magnetic material, and control the operating frequency to a second frequency band higher than the first frequency band and drive the currents of the first and second working coils to flow in the same direction when the object to be heated is a non-magnetic material.

The intermediate heating body can be formed of a magnetic metal or a non-magnetic metal having a thickness thinner than the skin depth.

Both the object to be heated and the intermediate heating body can be heated if the object to be heated is a magnetic metal, and an amount of heat generated in the object to be heated is greater than an amount of heat generated in the intermediate heating body.

Both the object to be heated and the intermediate heating body can be heated if the object to be heated is a non-magnetic metal.

Only the intermediate heating body can be heated if the object to be heated is a non-metal.

The amount of heat generated in the intermediate heating body can be adjusted as the operating frequency is adjusted.

### [Advantageous Effects]

According to an embodiment of the present disclosure, by controlling the magnetic field coupling force of the intermediate heating body according to the material of the container, the container or the intermediate heating body can be selectively and intensively heated, thereby improving the heating efficiency.

According to an embodiment of the present disclosure, there is an advantage in that the heating efficiency for each material of the container can be improved only by controlling the frequency.

According to an embodiment of the present disclosure, by applying not only the frequency control but also the phase control to further maximize the heat generation control of the intermediate heating body according to the material of the container, there is an advantage in that the heating efficiency of each of the magnetic material and the non-magnetic material can be improved.

### [Description of Drawings]

FIG. 1 is a perspective view illustrating an induction heating type cooktop according to an embodiment of the present disclosure.
FIG. 2 is a circuit diagram of an induction heating type cooktop according to an embodiment of the present disclosure.
FIG. 3 is a cross-sectional view illustrating an induction heating type cooktop and an object to be heated according to an embodiment of the present disclosure.
FIG. 4 is a cross-sectional view illustrating an induction heating type cooktop and an object to be heated according to another embodiment of the present disclosure.
FIG. 5 is a drawing for explaining the design principle of an intermediate heating body according to an embodiment of the present disclosure.
FIG. 6 is a control block diagram of a cooktop according to an embodiment of the present disclosure.
FIG. 7 is a flowchart illustrating an operating method of a cooktop according to an embodiment of the present disclosure.
FIG. 8 is a drawing illustrating a heated area when a cooktop according to an embodiment of the present disclosure heats an object to be heated.
FIG. 9 is a drawing explaining a heated area when a cooktop according to an embodiment of the present disclosure heats an object to be heated.
FIG. 10 is a flowchart illustrating an operating method of a cooktop according to another embodiment of the present disclosure.
FIG. 11 is a drawing illustrating a working coil and an intermediate heating body when current directions flowing through a plurality of working coils are different according to an embodiment of the present disclosure.
FIG. 12 is a drawing illustrating a working coil and an intermediate heating body when current directions flowing through a plurality of working coils are the same according to an embodiment of the present disclosure.
FIG. 13 is a drawing illustrating a magnetic field concentration area when current directions flowing through a plurality of working coils are different according to an embodiment of the present disclosure.
FIG. 14 is a drawing illustrating a magnetic field concentration area when the current direction flowing through a plurality of working coils are the same according to an embodiment of the present disclosure.
FIG. 15 is a drawing illustrating a heated area according to frequency control and phase control according to an embodiment of the present disclosure.
FIG. 16 is a drawing illustrating shapes of a working coils according to various embodiments of the present disclosure.
FIG. 17 is a drawing illustrating shapes of intermediate heating bodys according to various embodiments of the present disclosure.

### [Best Mode]

Hereinafter, preferred embodiments according to the present disclosure will be described in detail with reference to the accompanying drawings. In the drawings, the same reference numerals are used to indicate the same or similar components.

The suffixes "module" and "portion" for components used in the following description are given or used together in consideration of ease of writing the specification, and do not have meanings or roles that are distinct from each other by themselves.

In the following description, "connection" between components includes not only direct connection of components, but also indirect connection through at least one other component, unless otherwise specified.

Hereinafter, an induction heating type cooktop and an operating method thereof according to an embodiment of the present disclosure will be described. For convenience of explanation, "induction heating type cooktop" is referred to as "cooktop".

Hereinafter, a cooktop according to an embodiment of the present disclosure will be described.

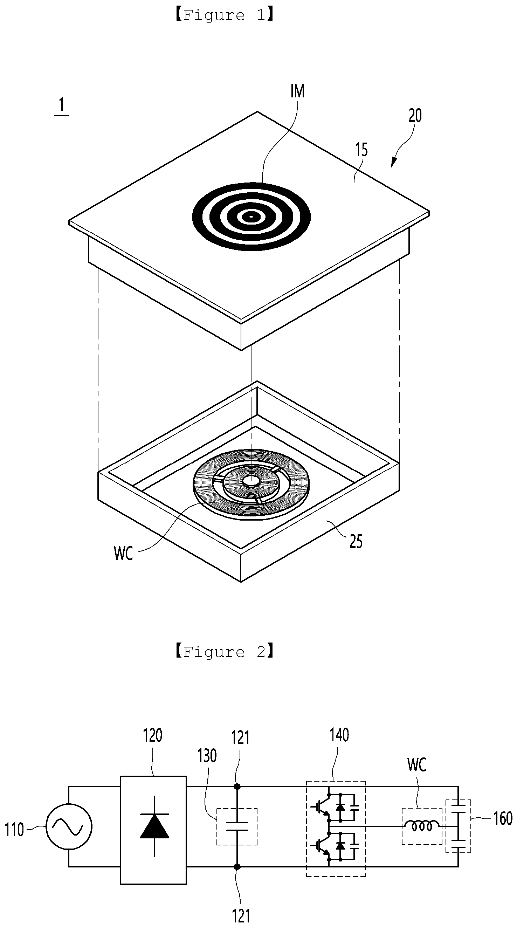

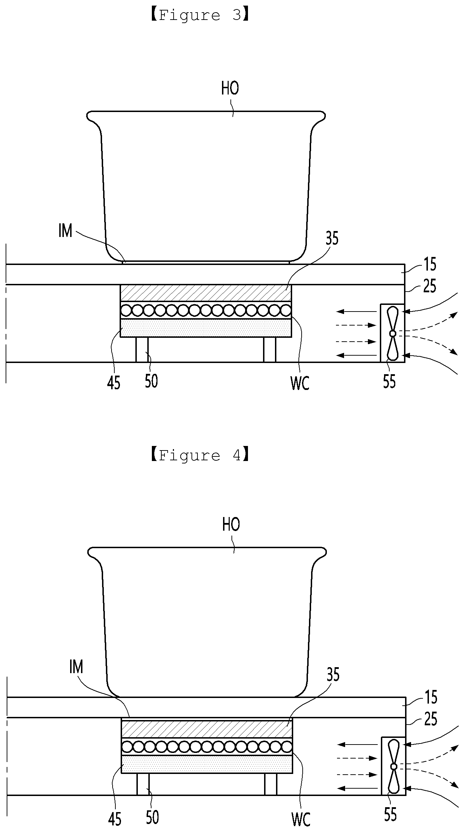

FIG. 1 is a perspective view illustrating a cooktop according to an embodiment of the present disclosure, FIG. 2 is a circuit diagram of a cooktop according to an embodiment of the present disclosure, FIG. 3 is a cross-sectional view illustrating a cooktop and an object to be heated according to an embodiment of the present disclosure. FIG. 4 is a cross-sectional view illustrating a cooktop and an object to be heated according to another embodiment of the present disclosure.

First, referring to FIG. 1, a cooktop 1 according to an embodiment of the present disclosure includes a case 25, a cover plate 20, a working coil (WC), and an intermediate heating body (IM).

The working coil WC may be installed in the case 25.

For reference, in the case 25, various devices related to driving of the working coil (for example, a power supply 110 (refer to FIG. 2) that provides alternating current (AC) power, a rectifier 120 (refer to FIG. 2) that rectifies the AC power of the power supply into direct current (DC) power, an inverter 140 (refer to FIG. 2) that converts the DC power rectified by the rectifier into resonance current through a switching operation to provides the resonance current to the working coil WC, a control module (not shown) that controls operations of various devices within the induction heating type cooktop 1.

The cover plate 20 may be coupled to an upper end of the case 25. And, an upper plate 15 on which an object to be heated (not shown) is disposed can be provided on a top surface of the cover plate 20.

Specifically, the cover plate 20 may include the upper plate 15 for disposing an object to be heated, such as a cooking container. That is, an object to be heated may be disposed on the upper plate 15.

Here, for example, the upper plate 15 may be made of a glass material (e.g., ceramics glass). However, this is only an example and is not limited thereto, and the material of the upper plate 15 may vary.

In addition, the upper plate 15 may be provided with an input interface (not shown) that receives an input from a user to transmit the input to a control module for an input interface (not shown). Of course, the input interface may be provided at a position other than the upper plate 15.

For reference, the input interface may be a module for inputting a desired heating intensity or driving time of the cooktop 1 and may be variously implemented with a physical button or a touch panel. Also, the input interface may include, for example, a power button, a lock button, a power level adjustment button (+, -), a timer adjustment button (+, -), a charging mode button, and the like. In addition, the input interface may transmit the input received from the user to the control module for the input interface (not shown), and the control module for the input interface may transmit the input to the aforementioned control module (i.e., the control module for the inverter). In addition, the aforementioned control module may control the operations of various devices (e.g., the working coils WCs) based on the input (i.e., a user input) provided from the control module for the input interface, and specific details thereof will be omitted.

Whether the working coil WC is driven and the heating intensity (i.e., thermal power) may be visually displayed on the upper plate 15 in a shape of a burner. The shape of the burner may be indicated by an indicator (not shown) constituted by a plurality of light emitting devices (e.g., LEDs) provided in the case 25.

The working coil WC may be installed inside the case 25 to heat the object to be heated.

Specifically, the working coil WC may be driven by the aforementioned control module (not shown), and when the object to be heated is disposed on the upper plate 15, the working coil WC may be driven by the control module.

In addition, the working coil WC may directly heat a magnetic object to be heated (i.e., a magnetic material) and may indirectly heat a non-magnetic object to be heated (i.e., a non-magnetic material) through an intermediate heating body IM.

In addition, the working coil WC may heat the object to be heated in an induction heating manner and may be provided to overlap the intermediate heating body IM in a longitudinal direction (i.e., a vertical direction or an upward and downward direction).

For reference, although the structure in which one working coil WC is installed in the case 25 is illustrated in FIG. 1, the embodiment is not limited thereto. That is, one or more working coils WC may be installed in the case 25. The intermediate heating body IM may be installed to correspond to the working coil WC. The number of intermediate heating bodies IM and the number of working coils WC may be the same.

The intermediate heating body IM may be installed on the upper plate 15. The intermediate heating body IM may be coated on the upper plate 15 to heat the non-magnetic material among the objects to be heated. The intermediate heating body IM may be inductively heated by the working coil WC.

The intermediate heating body IM may be disposed on a top surface or a bottom surface of the upper plate 15. For example, as illustrated in FIG. 2, the intermediate heating body IM may be installed on the top surface of the upper plate 15, or as illustrated in FIG. 3, the intermediate heating body IM may be installed on the bottom surface of the upper plate 15.

The intermediate heating body IM may be provided to overlap the working coil WC in the longitudinal direction (i.e., the vertical direction or the upward and downward direction). Thus, the heating of the object to be heated may be possible regardless of the arrangement positions and types of the objects to be heated.

Also, the intermediate heating body IM may have at least one of magnetic or non-magnetic properties (i.e., a magnetic property, a non-magnetic property, or both the magnetic and non-magnetic properties).

In addition, the intermediate heating body IM may be made of, for example, a conductive material (e.g., aluminum), and as illustrated in the drawings, a plurality of rings having different diameters may be installed on the upper plate 15 in a repeated shape, but is not limited thereto. That is, the intermediate heating body IM may be made of a material other than a conductive material. Also, the intermediate heating body IM may be provided in a shape other than the shape in which the plurality of rings having different diameters are repeated.

For reference, although a single intermediate heating body IM is illustrated in FIGS. 3 and 4, the embodiment is not limited thereto. That is, a plurality of intermediate heating bodies may be installed, but for convenience of description, a single intermediate heating body IM may be installed as an example.

FIG. 2 is a circuit diagram of a cooktop according to an embodiment of the present disclosure.

Referring to FIG. 2, the induction heating type cooktop may include at least some or all of a power supply 110, a rectifier 120, a DC link capacitor 130, an inverter 140, a working coil WC, and a resonance capacitor 160.

The power supply 110 may receive external power. The power that the power supply 110 receives from the outside may be Alternation Current (AC) power.

The power supply 110 may supply AC voltage to the rectifier 120.

The rectifier 120 is an electrical device for converting AC into DC. The rectifier 120 converts the AC voltage supplied through the power supply 110 into a DC voltage. The rectifier 120 may supply the converted voltage to DC both terminals 121.

An output terminal of the rectifier 120 may be connected to DC both terminals 121. The DC both terminals 121 output through the rectifier 120 may be referred to as a DC link. The voltage measured across the DC both terminals 121 is referred to as the DC link voltage.

The DC link capacitor 130 serves as a buffer between the power supply 110 and the inverter 140. Specifically, the DC link capacitor 130 is used to maintain the DC link voltage converted through the rectifier 120 and supply the DC link voltage to the inverter 140.

The inverter 140 serves to switch a voltage applied to the working coil WC so that a high-frequency current flows through the working coil WC. The inverter 140 may apply current to the working coil WC. The inverter 140 may include a relay, a semiconductor switch, or the like that turns on or off the working coil WC. For example, the inverter 140 may include a semiconductor switch, and the semiconductor switch may be an Insulated Gate Bipolar Transistor (IGBT) or a Wide Band Gab (WBG) element, but this is only exemplary and is not limited thereto. Meanwhile, the WBG element may be SiC (Silicon Carbide), GaN (Gallium Nitride), or the like. The inverter 140 causes a high-frequency current to flow through the working coil WC by driving the semi-conductor switch, and thus a high-frequency magnetic field is formed in the working coil WC.

The working coil WC may include at least one working coil WC generating a magnetic field for heating the object to be heated. Current may or may not flow through the working coil WC depending on whether the switching element is driven. When a current flows through the working coil WC, a magnetic field is generated. The working coil WC may heat the cooktop by generating a magnetic field as current flows.

One side of the working coil WC is connected to the connection point of the switching element of the inverter 140, and the other side thereof is connected to the resonant capacitor 160.

The driving of the switching element is performed by a driver (not shown), and is controlled at a switching time output from the driver to apply a high-frequency voltage to the working coil WC while the switching elements alternately operate with each other. In addition, since the on/off time of the switching element applied from the driver (not shown) is controlled in a gradually compensated manner, the voltage supplied to the working coil WC changes from a low voltage to a high voltage.

The resonance capacitor 160 may resonate with the working coil WC.

The resonance capacitor 160 may be a component for serving as a shock absorber. The resonance capacitor 160 affects the energy loss during the turn-off time by adjusting the saturation voltage rise rate during the turn-off of the switching element.

Next, referring to FIGS. 3 and 4, the induction heating type cooktop 1 according to an embodiment of the present disclosure may further include at least some or all of an insulating material 35, a shielding plate 45, a support member 50, and a cooling fan 55.

The insulating material 35 may be provided between the upper plate 15 and the working coil WC.

Specifically, the insulating material 35 may be mounted under the upper plate 15, and the working coil WC may be disposed below the insulating material 35.

The insulating material 35 may prevent heat generated while the intermediate heating body IM or the object to be is heated HO heated by the driving of the working coil WC from being transmitted to the working coil WC.

That is, when the intermediate heating body IM or the object to be heated HO is heated by electromagnetic induction of the working coil WC, the heat of the intermediate heating body IM or the object to be heated HO may be transferred to the upper plate 15, and then, the heat of the upper plate 15 may be transferred to the working coil WC again to damage the working coil WC.

The insulating material 35 may block the heat transferred to the working coil WC as described above to prevent the working coil WC from being damaged by the heat, and furthermore, prevent heating performance of the working coil WC from being deteriorated.

For reference, although it is not an essential component, a spacer (not shown) may be installed between the working coil WC and the insulating material 35.

Specifically, the spacer may be inserted between the working coil WC and the insulating material 35 so that the working coil WC and the insulating material 35 are not in directly contact with each other. Thus, the spacer (not shown) may prevent the heat generated while the intermediate heating body IM or the object to be heated HO is heated by the driving of the working coil WC from being transmitted to the working coil WC through the insulating material 35.

That is, since the spacer (not shown) partially shares the role of the insulating material 35, a thickness of the insulating material 35 may be minimized, and thus, a gap (or an interval) between the object to be heated HO and the working coil WC may be minimized.

In addition, the spacer (not shown) may be provided in plurality, and the plurality of spacers may be disposed to be spaced apart from each other between the working coil WC and the insulating material 35. Thus, air suctioned into the case 25 by a cooling fan 55 to be described later may be guided to the working coil WC by the spacers (not shown).

That is, the spacers (not shown) may guide the air introduced into the case 25 by the cooling fan 55 so as to be properly transferred to the working coil WC, thereby improving cooling efficiency of the working coil WC.

The shielding plate 45 may be mounted under the working coil WC to block magnetic fields generated downward when the working coil WC is driven.

Specifically, the shielding plate 45 may block the magnetic fields generated downward when the working coil WC is driven and may be supported upward by the support member 50.

The support member 50 may be installed between a bottom surface of the shielding plate 45 and the lower plate of the case 25 to support the shielding plate 45 upward.

Specifically, the support member 50 may support the shielding plate 45 upward to indirectly support the insulating material 35 and the working coil WC upward, and thus, the insulating material 35 may be in close contact with the upper plate 15.

As a result, the gap between the working coil WC and the object to be heated HO may be constantly maintained.

For reference, the support member 50 may include, for example, an elastic body (e.g., a spring) for supporting the shielding plate 45 upward, but is not limited thereto. In addition, since the support member 50 is not an essential component, it may be omitted from the induction heating type cooktop 1.

The cooling fan 55 may be installed inside the case 25 to cool the working coil WC.

Specifically, the cooling fan 55 may be controlled to be driven by the above-described control module and may be installed on a sidewall of the case 25. The cooling fan 55 may be installed at a position other than the sidewall of the case 25, but in the present disclosure, for convenience of explanation, the structure in which the cooling fan 55 is installed on the sidewall of the case 25 will be described as an example.

In addition, as illustrated in FIGS. 3 and 4, the cooling fan 55 may suck up air from the outside of the case 25 to deliver the air to the working coil WC or may suck up air (particularly, heated air) inside the case 25 to discharge the air outside of the case 25.

As a result, efficient cooling of the components (in particular, the working coil WC) inside the case 25 is possible.

Also, as described above, the air outside the case 25 delivered to the working coil WC by the cooling fan 55 may be guided to the working coil WC by the spacers. Thus, the direct and efficient cooling of the working coil WC is possible to improve durability of the working coil WC (i.e., improvement in durability due to prevention of thermal damage).

The intermediate heating body IM may be a material having a resistance value that is capable of being heated by the working coil WC.

A thickness of the intermediate heating body IM may be inversely proportional to the resistance value (i.e., a surface resistance value) of the intermediate heating body IM. That is, as the thickness of the intermediate heating body IM decreases, the resistance value (i.e., surface resistance value) of the intermediate heating body IM increases. Thus, the intermediate heating element IM can be thinly installed on the upper plate 15 and thus its characteristics can be changed into a heatable load.

For reference, the intermediate heating body IM according to the embodiment of FIG. 2 to FIG. 3 may have a thickness of, for example, about 0.1µm to about 1,000µm, but is not limited thereto.

The intermediate heating body IM having such characteristics may be present to heat the non-magnetic material, and thus, impedance characteristics between the intermediate heating body IM and the object to be heated HO may be changed according to whether the object to be heated HO disposed on the upper plate 15 is a magnetic material or non-magnetic material.

The case in which the object to be heated is the magnetic material will be described as follows.

A resistance component (R1) and an inductor component (L1) of the object to be heated HO may form an equivalent circuit with a resistance component (R2) and an inductor component (L2) of the intermediate heating body IM. In this case, the impedance (i.e., impedance measured by R1 and L1) of the object to be heated HO, which has the magnetism may be less than the impedance of the intermediate heating body IM (i.e., the impedance measured by R2 and L2). Thus, magnitude of the eddy current I1 applied to the magnetic object to be heated may be greater than magnitude of the eddy current I2 applied to the intermediate heating body IM. Thus, most of the eddy current generated by the working coil WC may be applied to the object to be heated HO, and thus, the object to be heated HO may be heated. That is, when the object to be heated HO is the magnetic material, the above-described equivalent circuit may be formed, and thus, most of the eddy current may be applied to the object to be heated HO. As a result, the working coil WC may directly heat the object to be heated HO.

Next, the case in which the object to be heated is the non-magnetic material will be described as follows.

When the object to be heated HO, which does not have the magnetism, is disposed on the upper plate 15, and the working coil WC is driven, there is no impedance in the non-magnetic object to be heated HO, and the intermediate heating body IM may have an impedance. That is, the resistance component R and the inductor component L may exist only in the intermediate heating body IM. Therefore, when the non-magnetic object to be heated HO is disposed on the upper plate 15 and the working coil WC is driven, the resistance component R and the inductor component L of the intermediate heating body IM may form an equivalent circuit. Thus, eddy current I may be applied only to the intermediate heating body IM, and eddy current may not be applied to the object to be heated HO, which does not have magnetism. More specifically, the eddy current I generated by the working coil WC may be applied only to the intermediate heating body IM, and thus, the intermediate heating body IM may be heated. That is, when the object to be heated HO is the non-magnetic material, the eddy current I may be applied to the intermediate heating body IM to heat the intermediate heating body IM, and the object to be heated HO, which does not have magnetism, may be indirectly heated by the intermediate heating body IM heated by the working coil WC. In this case, the intermediate heating body IM may be a main heating source.

In summary, the object to be heated HO may be directly or indirectly heated by a single heat source, which is called the working coil WC, regardless of whether the object to be heated HO is the magnetic material or the non-magnetic material. That is, when the object to be heated HO is the magnetic material, the working coil WC may directly heat the object to be heated HO, and when the object to be heated HO is the non-magnetic material, the intermediate heating body IM heated by the working coil WC may indirectly heat the object to be heated HO.

However, cooktop 10 equipped with intermediate heating body IM has a problem of reduced heating efficiency due to some magnetic fields not being coupled with the object to be heated HO but with the intermediate heating body IM when heating the magnetic material. In other words, if cooktop 10 is equipped with intermediate heating body IM, it can heat non-magnetic material, but heating efficiency for magnetic material may be reduced.

Therefore, the present disclosure provides a method for minimizing the reduction in heating efficiency for magnetic material in cooktop 10 equipped with intermediate heating body IM. According to one embodiment of the present disclosure, cooktop 10 controls the heat generation amount of intermediate heating body IM by controlling the operating frequency according to the material of object to be heated HO. According to one embodiment of the present disclosure, cooktop 10 controls the coupling force between the magnetic field and intermediate heating body IM by controlling the operating frequency according to the material of object to be heated HO.

In addition, the intermediate heating body IM may be required to be designed to have different coupling force with a magnetic field depending on the operating frequency. For example, the intermediate heating body IM may be designed to have lower coupling force with a magnetic field at an operating frequency corresponding to a first frequency band (e.g., about 20 to 50 kHz) and to have higher coupling force with a magnetic field at an operating frequency corresponding to a second frequency band (e.g., about 50 kHz or higher) higher than the first frequency band.

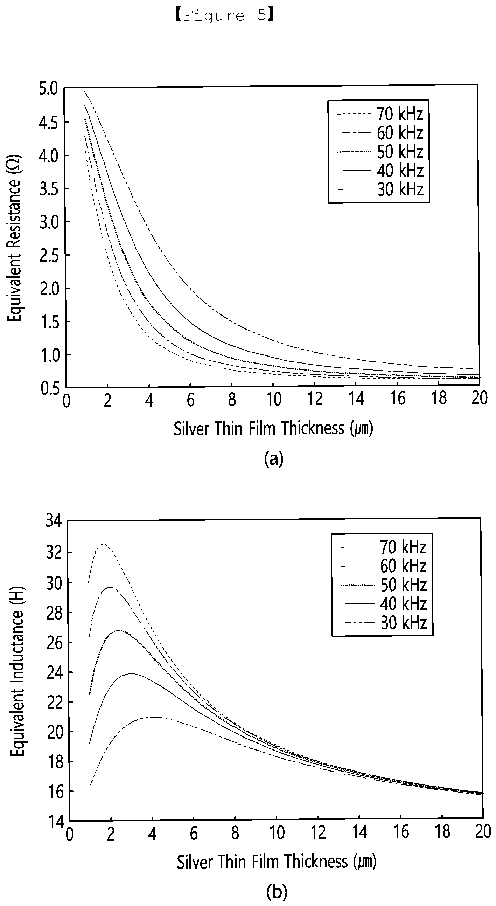

Fig. 5 is a drawing for explaining the design principle of the intermediate heating body according to an embodiment of the present disclosure.

Fig. 5 is explained assuming that the intermediate heating body IM is silver, but this is only an example for the convenience of explanation, and it is reasonable that it is not limited thereto.

Fig. 5 (a) is a graph showing the relationship between the thickness of the intermediate heating body IM and the equivalent resistance according to frequency, and Fig. 5 (b) is a graph showing the relationship between the thickness of the intermediate heating body IM and the equivalent inductance according to frequency.

Referring to Fig. 5 (a), it can be confirmed that the equivalent resistance increases as the frequency increases. Therefore, it can be predicted that the intermediate heating body IM is coupled with more magnetic fields as the operating frequency increases.

And, referring to Fig. 5 (b), it can be confirmed that the equivalent inductance increases as the frequency increases. However, in the case of the equivalent inductance, it can be confirmed that the equivalent inductance increases as the thickness decreases up to a certain thickness (different depending on the frequency, but approximately 2 to 4 um), but the equivalent inductance decreases as the thickness decreases below a certain thickness. In this way, if the thickness at which the equivalent inductance increases and then decreases as the thickness decreases is called a threshold thickness, it can be confirmed that the threshold thickness becomes thinner as the frequency increases. And, the intermediate heating body IM has an effect that the thickness becomes thinner as the temperature increases, so it can be confirmed that the equivalent inductance becomes very small when operating at a low frequency (for example, a frequency of less than 50 kHz) at a predetermined thickness (for example, about 3 um), and the equivalent inductance has a certain value or more when operating at a high frequency (for example, a frequency of 50 kHz or higher).

Therefore, the present disclosure provides an intermediate heating body IM designed to have a strong coupling force with a magnetic field at a high frequency of about 50 kHz or higher and a weak coupling force with a magnetic field at a low frequency of less than about 50 kHz, and the heat generation amount in the intermediate heating body IM can be controlled by controlling the frequency according to the material of the object to be heated HO.

To this end, the intermediate heating body IM can be formed of a non-magnetic material having a thickness less than or equal to the skin depth. However, the present disclosure is not limited thereto, and the intermediate heating body IM can have a thickness thicker than the skin depth.

In addition, as an example, the intermediate heating body IM may have a thickness of 3 um or more and 4 um or less, but this is only an example and therefore it is reasonable that it is not limited thereto. The intermediate heating body IM may be formed to have various patterns, and the thickness of the intermediate heating body IM may vary depending on the pattern. In addition, the thickness of the intermediate heating body IM may vary depending on the control method of the cooktop 1.

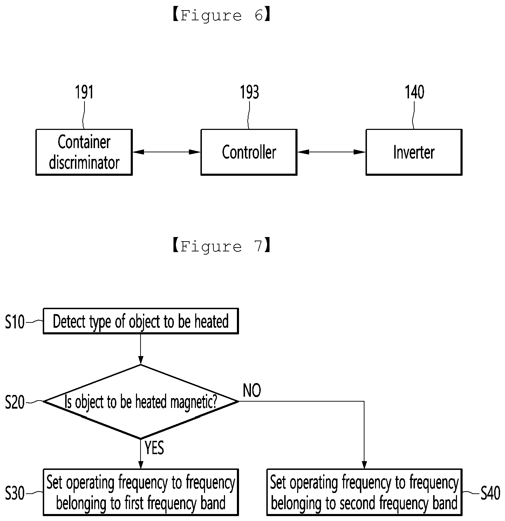

FIG. 6 is a control block diagram of a cooktop according to an embodiment of the present disclosure.

The cooktop 1 according to an embodiment of the present disclosure may include at least some or all of a container discriminator 191, a controller 193, and an inverter 140. Meanwhile, FIG. 6 illustrates only the configuration necessary to explain how cooktop 1 adjusts the operating frequency according to the material of the object to be heated HO, and it is clear that it may further include other configurations in addition to the configuration illustrated in FIG. 6.

The container discriminator 191 can determine the type of the object to be heated HO, that is, the type of the cooking container 1. The container discriminator 191 can determine the material of the object to be heated HO. For example, the container discriminator 191 can determine whether the object to be heated HO is a magnetic material or a non-magnetic material.

In addition, the container discriminator 191 can also determine the size of the object to be heated HO.

Meanwhile, there may be various ways in which the container discriminator 191 determines the material of the object to be heated HO. For example, the container discriminator 191 can determine the material of the object to be heated HO based on input information from a user. As another example, the container discriminator 191 can also determine the material of the object to be heated HO by detecting the size of the output. However, this is merely an example, and the present disclosure is not limited to the method of determining the material of the object to be heated HO.

The inverter 140 may include a plurality of switching elements driven to cause current to flow through the working coil part WC. For example, the plurality of switching elements may be SiC (Silicon carbide) elements, but it is reasonable that the switching elements are not limited thereto. For example, the plurality of switching elements may be SiC (Silicon Carbide) or GaN (Gallium Nitride). That is, the plurality of switching elements may be WBG (Wide Band-Gap) elements.

The large band gap of the WBG element enables use at high voltage, the high thermal conductivity enables use at high temperature environments, and the high carrier concentration and electron mobility enable high switching frequency operation. Therefore, the cooktop 1 according to the embodiment of the present disclosure can perform high voltage, high current switching operation by configuring the inverter 140 as a WBG element. The inverter 140 can operate at a high frequency of about 50 kHz or more.

The inverter 140 can change the operating frequency according to the material of the object to be heated HO.

In addition, the inverter 140 can control the direction of the current flowing in the plurality of working coils WC. In order to adjust the coupling force between the magnetic field generated in the working coil WC and the intermediate heating body IM, the inverter 140 can additionally control the direction of the current flowing in the plurality of working coils WC.

When the working coil WC includes the first working coil WC1 and the second working coil WC2, the first direction of the first current flowing in the first working coil WC1 and the second direction of the second current flowing in the second working coil WC2 can be controlled.

That is, the inverter 140 can control at least one of the operating frequency and the current direction of the working coil WC according to the material of the object to be heated HO.

The controller 193 can control the operation of the cooktop 1. The controller 193 can control each component equipped in the cooktop 1, such as the container discriminator 191 and the inverter 140.

More specifically, the working coil WC generates a magnetic field for heating the object to be heated HO or the intermediate heating body IM, and the inverter 140 is driven to supply current to the working coil WC, and the operating frequency can be adjusted depending on the material of the object to be heated HO.

FIG. 7 is a flowchart illustrating an operation method of a cooktop according to an embodiment of the present disclosure.

The controller 193 can detect the type of the object to be heated HO (S10).

The controller 193 can detect the type of the object to be heated HO by determining the material of the object to be heated HO.

The controller 193 can obtain whether the object to be heated HO is a magnetic material (S20).

The controller 193 can determine whether the object to be heated HO is a magnetic material based on the result of detecting the type of the object to be heated HO.

If the controller 193 determines that the object to be heated HO is a magnetic material, the controller 193 can set the operating frequency to a frequency belonging to the first frequency band (S30).

The object to be heated HO, which is a magnetic material, may be a metal container having magnetism.

The first frequency band may include a frequency band of 20 kHz or more and less than 50 kHz.

On the other hand, if the controller 193 determines that the object to be heated HO is not a magnetic material, the controller 193 may set the operating frequency to a frequency belonging to the second frequency band (S40).

The object to be heated HO, which is not a magnetic material, may be a non-magnetic metal container or a non-metal container.

The second frequency band may be higher than the first frequency band. The second frequency band may include a frequency band of 50 kHz or more.

In this way, the cooktop 1 according to the embodiment of the present disclosure may control the operating frequency differently depending on the material of the object to be heated HO. In particular, the inverter 140 can adjust the operating frequency when the object to be heated HO is a magnetic material to be lower than the operating frequency when the object to be heated HO is a non-magnetic material.

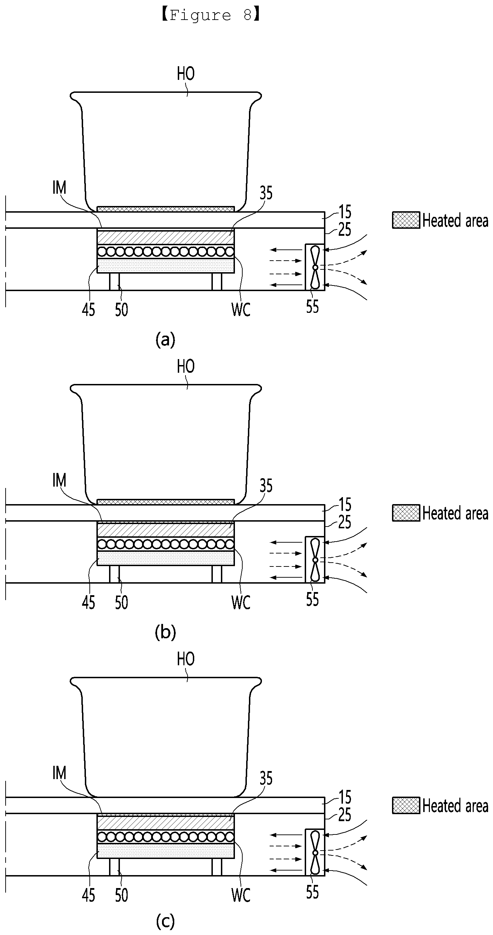

In addition, the heated area in cooktop 1 changes depending on the operating frequency, and this will be explained with reference to Fig. 8.

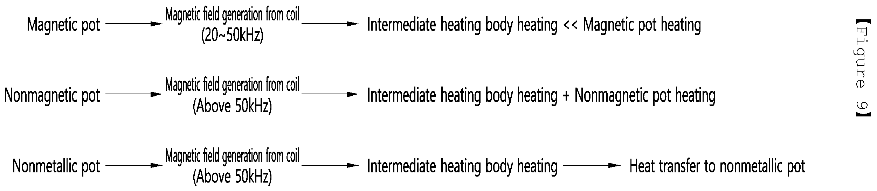

FIG. 8 is a drawing illustrating a heated area when a cooktop according to an embodiment of the present disclosure heats the object to be heated, and FIG. 9 is a drawing explaining a heated area when a cooktop according to an embodiment of the present disclosure heats the object to be heated.

FIG. 8 (a) is a drawing illustrating an area heated in cooktop 1 when the object to be heated HO is a magnetic metal container. When the object to be heated HO is a magnetic metal container, the cooktop 1 can operate at an operating frequency that falls within a first frequency band (e.g., 20 to 50 kHz). In addition, the intermediate heating body IM is made of a non-magnetic metal and has a thickness thinner than the skin depth, so that when the operating frequency falls within the first frequency band, the magnetic field can be coupled more with the object to be heated HO than with the intermediate heating body IM.

Therefore, as shown in Fig. 8 (a), if the object to be heated HO is a magnetic metal container, although the intermediate heating body IM also generates some heat, the lower part of the object to be heated HO may be heated as the main heat source. In other words, the amount of heat generated in the object to be heated HO may be much greater than the amount of heat generated in the intermediate heating body IM. In this case, the main heat source may be the object to be heated HO.

Fig. 8 (b) is a drawing showing an area heated in cooktop 1 when the object to be heated HO is a non-magnetic metal container. When the object to be heated HO is a non-magnetic metal container, the cooktop 1 may operate at an operating frequency that falls within a second frequency band (e.g., 50 kHz or higher) higher than the first frequency band. In addition, when the operating frequency falls within a second frequency band higher than the first frequency band, the magnetic coupling between the intermediate heating body IM and the working coil WC may be strengthened. That is, when the operating frequency belongs to the second frequency band, since the equivalent resistance and equivalent impedance increase, the magnetic field has a stronger coupling force with the intermediate heating body IM, and thus both the intermediate heating body IM and the object to be heated HO can be heated.

Therefore, as shown in FIG. 8 (b), when the object to be heated HO is a non-magnetic metal container, the lower part of the object to be heated HO and the intermediate heating body IM are heated, and both the object to be heated HO and the intermediate heating body IM can be heated.

FIG. 8 (c) is a drawing showing an area heated in cooktop 1 when the object to be heated HO is a non-metallic container. When the object to be heated HO is a non-metallic container, cooktop 1 can be operated at an operating frequency belonging to a second frequency band (e.g., 50 kHz or higher) higher than the first frequency band. Therefore, as described in Fig. 8 (b), when the operating frequency belongs to the second frequency band higher than the first frequency band, the magnetic coupling between the intermediate heating body IM and the working coil WC becomes stronger, and accordingly, the equivalent resistance and equivalent impedance increase, so that the magnetic field can have a stronger coupling force with the intermediate heating body IM. On the other hand, since the non-metallic container has a very weak coupling force with the magnetic field, only the intermediate heating body IM can be heated.

Therefore, as shown in Fig. 8 (c), when the object to be heated HO is a non-metallic container, only the intermediate heating body IM is heated, and the heat generated in the intermediate heating body IM is transferred to the non-metallic container, so that the non-metallic container can be heated. In this case, the main heat source can be the intermediate heating body IM.

In summary, when the object to be heated HO is a magnetic metal, both the object to be heated HO and the intermediate heating body IM are heated, and the amount of heat generated in the object to be heated HO can be greater than the amount of heat generated in the intermediate heating body IM. If the object to be heated HO is a non-magnetic metal, both the object to be heated HO and the intermediate heating body IM can be heated. If the object to be heated HO is a non-metal, only the intermediate heating body IM can be heated.

Therefore, the amount of heat generated of the intermediate heating body IM can be controlled as the operating frequency is controlled. According to an embodiment of the present disclosure, the inverter 140 can change the main heating source by controlling the operating frequency according to the material of the object to be heated HO.

Meanwhile, according to another embodiment of the present disclosure, cooktop 1 can control the magnetic field coupling force of the intermediate heating body IM through the phase control of the working coil WC while controlling the operating frequency according to the material of the object to be heated HO. That is, the working coil WC includes first and second working coils WC1 and WC2, and the inverter 140 can control the operating frequency and the current of the first and second working coils WC1 and WC2 according to the material of the object to be heated HO.

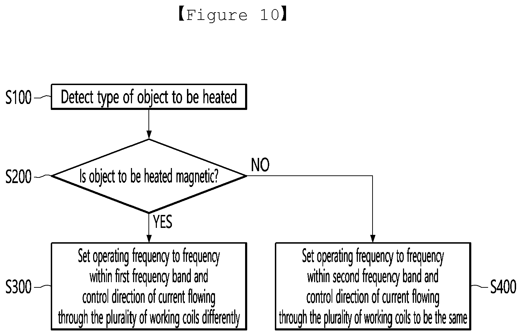

FIG. 10 is a flowchart illustrating an operating method of a cooktop according to another embodiment of the present disclosure.

The controller 193 can detect the type of the object to be heated HO (S100).

The controller 193 can detect the type of the object to be heated HO by determining the material of the object to be heated HO.

The controller 193 can obtain whether the object to be heated HO is a magnetic material (S200).

The controller 193 can determine whether the object to be heated HO is a magnetic material based on the result of detecting the type of the object to be heated HO.

If the controller 193 determines that the object to be heated HO is a magnetic material, the controller 193 can set the operating frequency to a frequency belonging to a first frequency band and control the direction of the current flowing through the plurality of working coils WC differently (S300).

The object to be heated HO, which is a magnetic material, can be a metal container having magnetism.

The first frequency band can include a frequency band of 20 kHz or more and less than 50 kHz.

On the other hand, if the controller 193 determines that the object to be heated HO is not a magnetic material, set the operating frequency to a frequency belonging to the second frequency band, and control the direction of the current flowing through the plurality of working coils WC to be the same (S400).

The object to be heated HO, which is not a magnetic material, can be a non-magnetic metal container or a non-metallic container.

The second frequency band can be higher than the first frequency band. The second frequency band can include a frequency band of 50 kHz or more.

In summary, when the object to be heated HO is a magnetic material, the inverter 140 controls the operating frequency to a first frequency band and drives the currents of the first and second working coils WC1 and WC2 to flow in different directions, and when the object to be heated HO is a non-magnetic material, the inverter 140 controls the operating frequency to a second frequency band higher than the first frequency band and drives the currents of the first and second working coils WC1 and WC2 to flow in the same direction.

The method of changing the main heating source by setting the operating frequency to the first frequency band or the second frequency band is described in detail in FIGS. 7 to 9, and the method of controlling the magnetic field coupling force by controlling the direction of the current flowing through a plurality of working coils WC will be described in detail below.

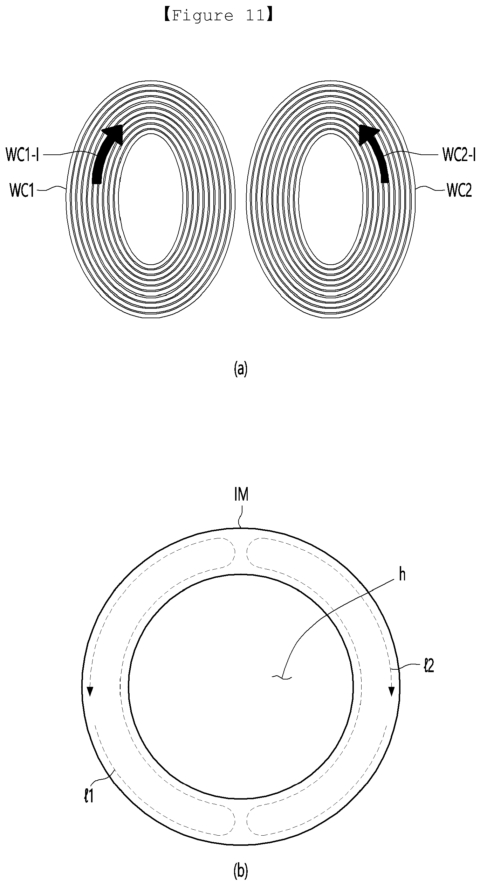

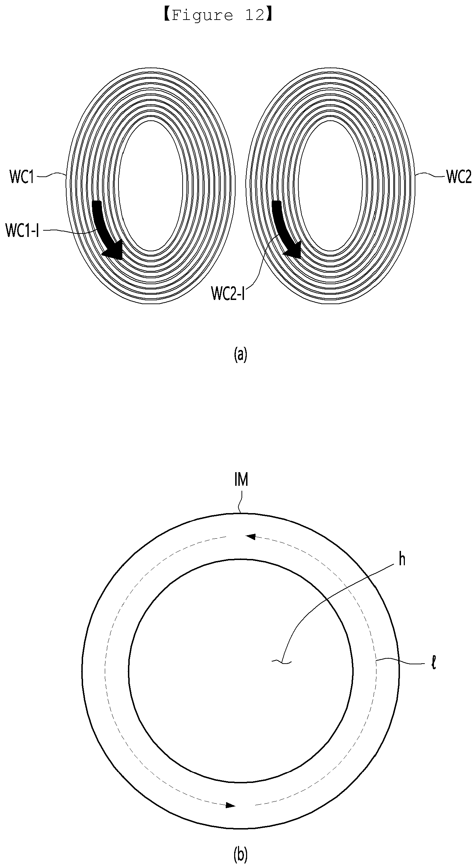

FIG. 11 is a drawing illustrating a working coil and an intermediate heating body when the current directions flowing through a plurality of working coils are different according to an embodiment of the present disclosure, and FIG. 12 is a drawing illustrating a working coil and an intermediate heating body when the current directions flowing through a plurality of working coils are the same according to an embodiment of the present disclosure.

In particular, FIG. 11 and FIG. 12 may be a case where the intermediate heating body IM is formed as a single ring.

The inverter 140 may control the first direction of the first current WC1-I flowing through the first working coil WC1 and the second direction of the second current WC2-I flowing through the second working coil WC2 differently when the object to be heated HO is a magnetic material. As in the example illustrated in FIG. 11 (a), the first direction may be clockwise and the second direction may be counterclockwise. However, this is merely an example, and the first direction may be counterclockwise and the second direction may be clockwise.

Meanwhile, Fig. 11 (b) illustrates the flow of induced current due to the magnetic field generated in the first and second working coils WC1 and WC2. The induced current flows counterclockwise in the intermediate heating body IM due to the magnetic field generated in the first working coil WC1, and the induced current flows clockwise in the intermediate heating body IM due to the magnetic field generated in the second working coil WC2. That is, the induced current by the first working coil WC1 and the induced current by the second working coil WC2 flow in different directions, and accordingly, the loops formed by each induced current can be electrically separated. That is, when the currents induced in the intermediate heating body IM flow in different directions, the loops can be formed separately on the left and right. That is, as illustrated in Fig. 11 (b), a first loop l1 generated by the current induced by the first working coil WC1 and a second loop l2 generated by the current induced by the second working coil WC2 can be formed in the intermediate heating body IM.

In this case, the area of the loop formed in the intermediate heating body IM may be the sum of the area of the first loop l1 and the area of the second loop l2. This is smaller than the area of the loop described later in Fig. 12, and thus the coupling force with the magnetic field generated in the working coil part WC may be weakened.

Meanwhile, when the object to be heated HO is a non-magnetic material, the inverter 140 may control the first direction of the first current WC1-I flowing in the first working coil WC1 and the second direction of the second current WC2-I flowing in the second working coil WC2 to be identical. As in the example illustrated in Fig. 12 (a), both the first direction and the second direction may be counterclockwise. However, this is merely exemplary, and both the first direction and the second direction may be clockwise.

Meanwhile, Fig. 12 (b) illustrates the flow of induced current due to the magnetic field generated in the first and second working coils WC1 and WC2. The induced current flows counterclockwise in the intermediate heating body IM due to the magnetic field generated in the first working coil WC1, and similarly, the induced current can flow counterclockwise in the intermediate heating body IM due to the magnetic field generated in the second working coil WC2. That is, the induced current by the first working coil WC1 and the induced current by the second working coil WC2 flow in the same direction, and thus, each induced current can form one large loop. That is, as illustrated in Fig. 21 (b), one loop l can be formed in the intermediate heating body IM by the first working coil WC1 and the second working coil WC2.

In this case, the area of the loop formed in the intermediate heating body IM can be the area of the integrated loop l, and thus, the magnetic field passing through the integrated loop l can be coupled, so that the intermediate heating body IM can have a stronger coupling force with the magnetic field generated in the working coil part WC.

That is, when the object to be heated HO is a magnetic material, the area of the loop formed in the intermediate heating body IM becomes smaller, so that the magnetic field coupled with the object to be heated HO can increase. In addition, since the magnetic field generated in the working coil part WC has a smaller coupling force with the intermediate heating body IM, the amount of heat generated in the intermediate heating body IM can be minimized.

On the other hand, when the object to be heated HO is a non-magnetic material, the area of the loop formed in the intermediate heating body IM becomes larger, so that the magnetic field generated in the working coil part WC has a larger coupling force with the intermediate heating body IM, so that the intermediate heating body IM can be coupled with many magnetic fields. Accordingly, since the intermediate heating body IM generates heat, the object to be heated HO can be heated through the intermediate heating body IM.

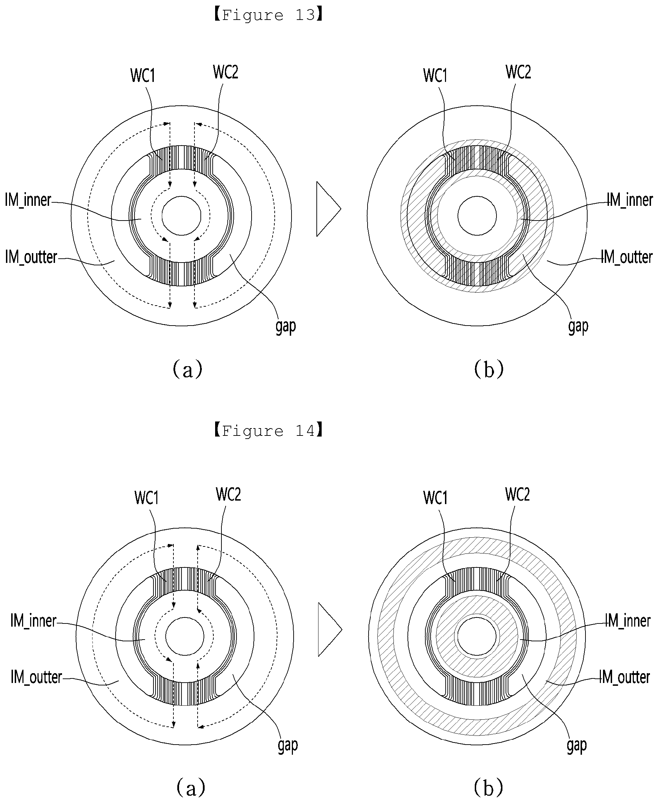

FIG. 13 is a drawing illustrating a magnetic field concentration area when the current directions flowing through a plurality of working coils are different according to an embodiment of the present disclosure, and FIG. 14 is a drawing illustrating a magnetic field concentration area when the current directions flowing through a plurality of working coils are the same according to an embodiment of the present disclosure.

In particular, FIG. 13 and FIG. 14 illustrate a case where the intermediate heating body IM may be formed of a plurality of rings. That is, the intermediate heating body IM may be composed of an inner intermediate heating body IM_inner and an outer intermediate heating body IM_outter, and the inner intermediate heating body IM_inner may be arranged inside the outer intermediate heating body IM_outter.

In FIG. 13 and FIG. 14, the working coils WC1 WC2 and the intermediate heating bodies IM_inner IM_outter are depicted as viewed from above, and a portion of the working coils WC1 WC2 positioned below the intermediate heating bodies IM_inner IM_outter may be covered.

In FIG. 13 and FIG. 14, the working coils WC1 WC2 may include the first working coil WC1 positioned on the left and the second working coil WC2 positioned on the right.

The dotted lines depicted in FIG. 13 (a) and FIG. 14 (a) indicate the direction of current flowing through the working coils WC1 WC2.

First, referring to the example of FIG. 13 (a), the direction of current flowing through the first working coil WC1 and the second working coil WC2 may be different. That is, the current can flow clockwise in the first working coil WC1, and the current can flow counterclockwise in the second working coil WC2. The phase difference between the current flowing in the first working coil WC1 and the current flowing in the second working coil WC2 can be 180 degrees.

Since the magnetic fields of the areas where the currents face each other are canceled, in this case, the magnetic fields generated in the first and second working coils WC1 WC2 can be concentrated in the region (gap) between the inner intermediate heating body IM_inner and the outer intermediate heating body IM_outter. The region indicated by the hatching in Fig. 13 (b) can be a magnetic field concentration region.

Therefore, the magnetic fields generated in the first and second working coils WC1 WC2 can pass through the region (gap) between the inner intermediate heating body IM_inner and the outer intermediate heating body IM_outter to directly heat the object to be heated HO.

Next, referring to the example of Fig. 14 (a), the direction of the current flowing through the first working coil WC1 and the second working coil WC2 may be the same. That is, the current may flow clockwise in each of the first working coil WC1 and the second working coil WC2. The phase difference between the current flowing through the first working coil WC1 and the current flowing through the second working coil WC2 may be 0 degrees.

Since the magnetic fields of the areas where the currents face each other are canceled, in this case, the magnetic fields generated in the first and second working coils WC1 WC2 may be concentrated on the inner intermediate heating body IM_inner and the outer intermediate heating body IM_outter, respectively. The area indicated by the hatching in Fig. 14 (b) may be a magnetic field concentration area.

Therefore, the magnetic fields generated in the first and second working coils WC1 and WC2 are concentrated on the inner intermediate heating body IM_inner and the outer intermediate heating body IM_outter, respectively, and therefore, the inner intermediate heating body IM_inner and the outer intermediate heating body IM_outter heated by the magnetic fields can heat the object to be heated HO.

In summary, as shown in FIGS. 13 and 14, the inverter 140 can control the direction of the current flowing through the working coils WC1 and WC2 so that the area where heat is generated in the intermediate heating body IM_inner IM_outter is changed depending on the type of the object to be heated HO. Accordingly, depending on the type of the object to be heated HO, the concentrated areas of the magnetic fields generated in the first working coil WC1 and the second working coil WC2 are different, and the area of the loop formed by the current induced in the intermediate heating body IM_inner IM_outter can be changed.

As described above through FIGS. 11 to 14, it can be confirmed that the coupling force between the magnetic field generated in the working coils WC and the intermediate heating body IM is decreased when the directions of the currents flowing through the plurality of working coils WC are different, and the coupling force between the magnetic field generated in the working coils WC and the intermediate heating body IM is increased when the directions of the currents flowing through the plurality of working coils WC are the same.

That is, the cooktop 1 according to the embodiment of the present disclosure can control the heating amount of the intermediate heating body IM not only through frequency control, but also maximize the heating amount control of the intermediate heating body IM through phase control of the currents flowing through the plurality of working coils WC.

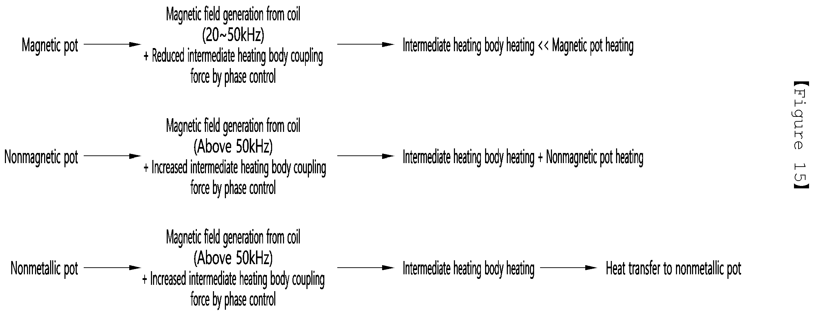

FIG. 15 is a drawing explaining a heated area according to frequency control and phase control according to an embodiment of the present disclosure.

When the object to be heated HO is a magnetic metal container, the cooktop 1 operates at an operating frequency belonging to a first frequency band (e.g., 20 to 50 kHz) and simultaneously controls the direction of the current flowing through the working coils WC differently, thereby reducing the coupling force between the intermediate heating body IM and the magnetic field, and thus the lower part of the object to be heated HO can be heated as a main heat source. That is, the heat generation amount in the object to be heated HO can be much greater than the heat generation amount in the intermediate heating body IM.

If the object to be heated HO is a non-magnetic metal container, the cooktop 1 operates at an operating frequency belonging to a second frequency band (e.g., 50 kHz or higher) higher than the first frequency band while simultaneously controlling the direction of the current flowing through the working coils WC in the same manner, thereby increasing the coupling force of the intermediate heating body IM with the magnetic field, and thus both the intermediate heating body IM and the object to be heated HO can be heated.

On the other hand, if the object to be heated HO is a non-metallic container, the cooktop 1 operates at an operating frequency belonging to a second frequency band (e.g., 50 kHz or higher) higher than the first frequency band while simultaneously controlling the direction of the current flowing through the working coils WC in the same manner, thereby increasing the coupling force of the intermediate heating body IM with the magnetic field, and since the non-metallic container has a very weak coupling force with the magnetic field, only the intermediate heating body IM can be heated. The heat generated in the intermediate heating body IM is transferred to the non-metallic container, so that the non-metallic container can be heated.

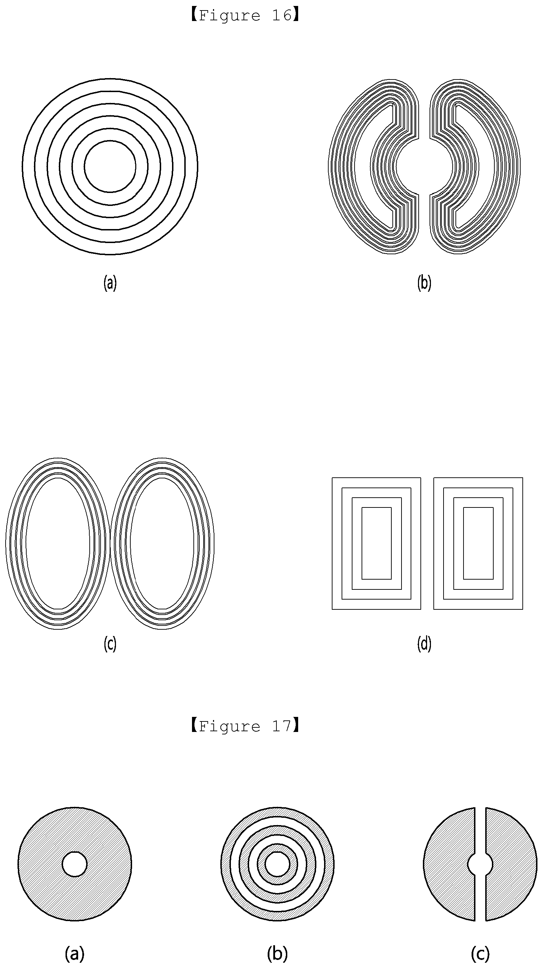

FIG. 16 is a drawing illustrating a shape of a working coil according to various embodiments of the present disclosure.

As illustrated in FIG. 16 (a), the working coil WC may be formed by a plurality of ring-shaped coils of different sizes, and may be formed in a shape in which a coil of a smaller size is arranged inside a coil of a larger size.

Alternatively, as illustrated in FIG. 16 (b), the working coil WC may be formed in a shape in which two coils are arranged side by side, and in this case, each coil may be formed in a semicircular shape, but the surface facing the other coil may be formed concavely toward the inside.

Alternatively, as illustrated in FIG. 16 (c), the working coil WC may be formed in a shape in which two coils are arranged side by side, and in this case, each coil may be formed in a circular shape.

Or, as shown in FIG. 16 (d), the working coil WC may be formed in a form in which two coils are arranged in a parallel manner from left to right, and at this time, each coil may be formed in a quadrilateral shape.

FIG. 17 is a drawing illustrating a shape of an intermediate heating body according to various embodiments of the present disclosure.

As shown in FIG. 17 (a), the intermediate heating body IM may be formed in a ring shape with a hole formed in the center.

Or, as shown in FIG. 17 (b), the intermediate heating body IM may be formed in a form in which a plurality of ring-shaped heating bodies of different sizes are formed, and a heating body of a smaller size is arranged inside a heating body of a larger size.

When the intermediate heating body IM has a multi-ring shape as shown in FIG. 17(b), it may also be designed with a magnetic material regardless of the skin depth.

Alternatively, as shown in Fig. 17 (c), the intermediate heating body IM can be formed in a form in which two heating bodies are arranged side by side, and at this time, each heating body can have a semicircular shape, but the surface facing the other heating body can be formed to be concave inward.

The above description is merely an example of the technical idea of the present disclosure, and those with ordinary knowledge in the technical field to which the present disclosure belongs may make various modifications and variations without departing from the essential characteristics of the present disclosure.

Therefore, the embodiments disclosed in the present disclosure are not intended to limit the technical idea of the present disclosure but to explain it, and the scope of the technical idea of the present disclosure is not limited by these embodiments.

The protection scope of the present disclosure should be interpreted by the claims below, and all technical ideas within the equivalent scope should be interpreted as being included in the scope of the rights of the present disclosure.

## Claims

1. An induction heating type cooktop, comprising:
an upper plate on which an object to be heated is placed;
an intermediate heating body arranged on the upper plate;
a working coil configured to generate a magnetic field for heating the object to be heated or the intermediate heating body; and
an inverter that is driven so that a current is supplied to the working coil,
wherein the inverter is configured to adjust an operating frequency according to a material of the object to be heated.

2. The induction heating type cooktop of claim 1, wherein the intermediate heating body is formed of a non-magnetic metal.

3. The induction heating type cooktop of claim 1, wherein the inverter is configured to adjust the operating frequency when the object to be heated is a magnetic material to be lower than the operating frequency when the object to be heated is a non-magnetic material.

4. The induction heating type cooktop of claim 3, wherein the first frequency band includes a frequency band of 20 kHz or more and less than 50 kHz, and the second frequency band includes a frequency band of 50 kHz or more.

5. The induction heating type cooktop of claim 1, wherein the working coil includes first and second working coils, and
the inverter is configured to control the operating frequency and the current of the first and second working coils according to the material of the object to be heated.

6. The induction heating type cooktop of claim 5, wherein the inverter is configured to:
control the operating frequency to a first frequency band when the object to be heated is a magnetic material, and drives the currents of the first and second working coils to flow in different directions, and
control the operating frequency to a second frequency band higher than the first frequency band when the object to be heated is a non-magnetic material, and drives the currents of the first and second working coils to flow in the same direction.

7. The induction heating type cooktop of claim 5, wherein the intermediate heating body is formed of a magnetic metal or a non-magnetic metal having a thickness thinner than the skin depth.

8. The induction heating type cooktop of claim 1, wherein both the object to be heated and the intermediate heating body are heated if the object to be heated is a magnetic metal, and an amount of heat generated in the object to be heated is greater than an amount of heat generated in the intermediate heating body.

9. The induction heating type cooktop of claim 1, wherein both the object to be heated and the intermediate heating body are heated if the object to be heated is a non-magnetic metal.

10. The induction heating type cooktop of claim 1, wherein only the intermediate heating body is heated if the object to be heated is a non-metal.

11. The induction heating type cooktop of claim 1, wherein the amount of heat generated in the intermediate heating body is adjusted as the operating frequency is adjusted.
